# EUROPÄISCHE PATENTSCHRIFT

(11) **EP 2 265 878 B1**
(45) Veröffentlichungstag und Bekanntmachung des Hinweises auf die Patenterteilung: **09.03.2016**
(21) Anmeldenummer: 09728445.9
(22) Anmeldetag: 01.04.2009
(51) Int. Cl.: F26B 9/08, F26B 25/04

(54) **VORRICHTUNG ZUM FÖRDERN VON KORNGUT**
DEVICE FOR CONVEYING GRAINS
DISPOSITIF POUR LE TRANSPORT DE GRAINS

(30) Priorität: 04.04.2008 DE 202008004788 U
(43) Veröffentlichungstag der Anmeldung: 29.12.2010
(73) Patentinhaber: Wellenbrock, Lothar, 19073 Wittenförden (DE); Brautferger, Norbert, 19073 Wittenförden (DE)
(72) Erfinder: Wellenbrock, Lothar, 19073 Wittenförden (DE); Brautferger, Norbert, 19073 Wittenförden (DE)
(74) Vertreter: Gulde & Partner
(86) Internationale Anmeldenummer: PCT/DE2009/000447
(87) Internationale Veröffentlichungsnummer: WO 2009/121349

(56) Entgegenhaltungen:
- WO-A1-2004/078331
- DE-U1- 20 303 434
- DE-U1-202006 018 822
- US-A- 3 156 541
- US-A- 3 538 618
- US-A- 3 584 843

## Beschreibung

Die Erfindung bezieht sich auf eine Vorrichtung, die aus mindestens einer angetriebenen Förderschnecke und mindestens einer den Kräften der Förderschnecke und den Massenkräften der Vorrichtung entgegen wirkenden Hemmung besteht.
Derartige Vorrichtungen werden beispielsweise in der Getreidewirtschaft, insbesondere bei der Trocknung und/oder Lagerhaltung von Korngut im Flachlager oder im Silo eingesetzt.

Aus der WO 2004/078331 wurde erstmals eine stationäre Vorrichtung zum Umwälzen von Korngut bekannt, die während des Förderbetriebes eine Bedien- und Aufsichtsperson überflüssig macht. Diese Vorrichtung besteht aus einem Auflagekörper, der auf dem Korngut aufliegt, und aus einer angetriebenen Förderschnecke, die in das Korngut eintaucht und die das Korngut während des Betriebes aus einem untersten in einen obersten Lagerbereich fördert. Dabei besitzt der Auflagekörper eine Flächengröße, die der Förderleistung der Förderschnecke widersteht, und eine Hemmfläche, die im Kontakt mit dem Korngut steht und den Umfangskräften der drehenden Förderschnecke entgegen wirkt. Die Hemmfläche ist dabei in der Regel eine vertikal ausgerichtete Hemmplatte. Diese Vorrichtung ist effektvoll, weil sie das feuchte Korngut an die Oberfläche fördert und so eine ausreichende Trocknung ermöglicht. Die Vorrichtung ist aber stationär und so muss die Vorrichtung turnusmäßig von Ort zu Ort umgesetzt werden. Das ist umständlich und damit kostenintensiv.
In derselben WO 2004/078331 ist auch eine mobile Vorrichtung zum Umwälzen von Korngut beschrieben. Die mobile Vorrichtung hat generell den gleichen Aufbau wie die soeben beschriebene stationäre Vorrichtung. Im Unterschied zur stationären Vorrichtung besitzt der Auflagekörper der mobilen Vorrichtung lediglich einen unteren Füllraum für das geförderte Korngut, der einen seitlichen Ausstoßbereich zur seitlichen Ablage des geförderten Korngutes ausbildet. Dabei ist der Füllraum in seiner Größe und seiner Form derart ausgeführt, dass der von der Förderleistung der Förderschnecke ausgehender Druck innerhalb des Füllraumes auf die Vorrichtung einwirkt. Dieser seitliche Druck erzeugt eine Kraft, die die Vorrichtung entgegen der Ausstoßrichtung antreibt und bewegt. Da die vertikal ausgerichteten Seitenflächen des Füllraumes seitlichen Kontakt mit dem Korngut haben, üben sie ebenfalls eine Hemmung gegenüber den Umfangskräften der Förderschnecke aus. Bei einer entsprechenden Auslegung der Seitenflächen erübrigt sich eine gesonderte Hemmplatte.
Diese mobile Vorrichtung fördert also das Korngut auch von unten nach oben, legt das Korngut geordnet auf der Oberfläche der Kornschüttung ab und bewegt sich dabei selbstständig und geradeaus durch das gelagerte Korngut. Diese mobile Vorrichtung muss lediglich am Ende einer Fahrbahn manuell angehalten und umgelenkt werden. Die ein oder mehreren Hemmflächen können aber auch verstellbar ausgeführt und in besonderer Weise angeordnet sein, sodass sie gleichzeitig als Steuerelement wirken. Somit kann die Fahrrichtung der mobilen Vorrichtung verändert werden. Das erspart das manuelle Umlenken.

Wie die WO 2004/078331 ebenfalls beschreibt, kann die mobile Vorrichtung auch mit einer zweiten mobilen Vorrichtung zu einer starren Einheit verbunden werden, wozu entsprechende Kupplungseinrichtungen vorgesehen sind. Dadurch wird die Umwälzbahn verbreitert und die Fahrrichtung der mobilen Vorrichtung kann durch die Beeinflussung der Drehzahlen oder der Drehrichtungen der beiden Förderschnecken verändert werden. Separate Steuerplatten sind dann nicht mehr erforderlich. Die beiden Förderschnecken wirken gegenseitig auch als Hemmelemente, sodass dann auch keine separaten Hemmflächen mehr erforderlich sind.

Diese mobile Vorrichtung ist also wesentlich leistungsfähiger und einfacher zu handhaben als die stationäre Vorrichtung. Allerdings verlangt die mobile Vorrichtung zwei starke Antriebseinheiten, weil die Förderschnecken das Korngut über eine beträchtliche Höhe von einigen Metern von unten nach oben fördern und gleichzeitig die gesamte Vorrichtung mit den Förderschnecken durch das hohe Korngut schieben müssen. Die starken Antriebseinheiten sind einerseits teuer in der Anschaffung und andererseits sehr massiv und damit schwer bewegbar.
Es hat sich aber bei allen mobilen Ausführungen gezeigt, dass die Vorrichtung teuer in der Herstellung und für flächenmäßig große Korngutschüttungen nicht ausreichend leistungsfähig ist, weil die Fahrgeschwindigkeit zu gering ist.
Es hat sich aber auch gezeigt, dass die Fahrbewegung der mobilen Vorrichtung durch Schüttkegel behindert wird, die sich bei der Einlagerung des Schüttgutes in großer Anzahl gebildet haben. Diese Schüttkegel behindern aber nicht nur die Fahrbewegung der Vorrichtung, sondern führen auch zu einem örtlich unterschiedlichen Trocknungsprozess. Daher müssen die Schüttkegel nach der Einlagerung, aber spätestens vor der Umwälzung des Schüttgutes durch die gattungsgemäße Vorrichtung in aufwendiger Handarbeit oder durch eine aufwendige Technik eingeebnet werden.

Es besteht daher die Aufgabe, eine gattungsgemäße Vorrichtung zu entwickeln, die selbstantreibend ist und die Schüttgut universell fördern kann.
Diese Aufgabe wird durch eine Vorrichtung mit der in Anspruch 1 genannten Merkmalen gelöst.
Die neue Vorrichtung beseitigt die genannten Nachteile des Standes der Technik.
Dabei liegt der besondere Vorteil in der neuen Antriebsart, wenn die Förderschnecke vom Schüttgut umhüllt ist. Sowohl die Förderung des Korngutes als auch den Antrieb der Vorrichtung dann allein durch die Förderschnecke zu realisieren, ermöglicht eine sehr klein bauende und Kosten sparende Ausführung einer Vorrichtung zum Umwälzen. Dabei kann durch die Vorbestimmung des Winkels an der Förderschnecke ein optimales Verhältnis von Förderleistung und Antriebsleistung realisiert werden. Dieses Verhältnis kann durch eine Winkelverstelleinrichtung leicht auf unterschiedliche oder sich verändernde Bedingungen angepasst werden.
Die Winkelstellung der Förderschnecke zur Vertikalen ergibt sich in zweckdienlicher und alternativer Weise auch dadurch, dass die Förderschnecke vertikal ausgerichtet ist und der gesamte Auflagekörper mit der Förderschnecke während der Anwendung durch eine von außen eingeleitete Kraft angehoben wird. Diese Kraft kann beispielsweise eine Handkraft sein. Dazu ist am Auflagekörper ein entsprechender Hebel vorzusehen, wobei der Auflagekörper selbst der Hebel sein kann.
Die Förderschnecke wirkt mit ihrer Schrägstellung und ihrer Dimensionierung auch ihren eigenen Umfangskräften entgegen, sodass sie ganz oder teilweise als Hemmung wirkt.
Diese neue Antriebsart lässt sich auch leicht kombinieren mit der bislang bekannten Rückstoßtechnik der Vorrichtung, wenn beide Antriebskräfte ganz oder teilweise gleichgerichtet ausgeführt werden. Dabei kann die Rückstoßtechnik sowohl in der herkömmlichen Art mit einem oder mehreren Füllräumen realisiert werden. Es ist aber auch von einem besonderen Vorteil, wenn an Stelle der Füllräume am Auflagerkörper befindliche Rückstoßflächen jeder Art verwendet werden, sofern sie im Kontakt mit dem Korngut stehen und im Wirkungsbereich des von der Förderschnecke bewegten Getreides angeordnet sind. Die Summe der Antriebsarten erhöht die Antriebsleistung, ohne dass eine Beeinträchtigung der Förderleistung eintritt. Mit der Erhöhung der Antriebsleistung steigt auch gleich die Umwälzleistung. In der gleichen Zeit kann daher mehr Korngut umgewälzt werden.
Grundsätzlich werden bei allen Ausführungen der Vorrichtung als Hemmungen alle Flächen am Auflagekörper verstanden, die auf Grund ihrer Stellung Kontakt mit dem Korngut bekommen und deshalb belastet werden. Dazu gehören beispielsweise neben den Hemm- und Steuerplatten, den Rückstoßflächen und Seitenflächen der Füllräume auch die eine oder die mehreren Förderschnecken, die ebenfalls auf Grund ihrer Anzahl, ihrer Anordnung, ihrer Drehzahlen und ihrer Drehrichtungen eine hemmende Wirkung erzielen. Hemmungen der in Rede stehenden Art können auch eine erhöhte Reibung erzeugende Oberflächenstrukturen oder Materialbeschaffenheiten sein. Dabei können solwohl eine oder mehrere der in Frage kommenden Hemmungen eingesetzt und verwendet werden. Alle genannten Hemmungen sind auf Grund ihrer hemmenden Wirkung auch dazu geeignet, die Vorrichtung in ihrer Bewegungsrichtung zu beeinflussen. Hemmungen sind also auch immer Steuereinheiten. Wenn Hemmungen im Wirkungsbereich des von der Förderschnecke bewegten Getreides angeordnet sind, dann sind sie auch gleichzeitig Antriebselemente.
Zweckmäßige Ausgestaltungen ergeben sich aus den Unteransprüchen 2 bis 4.

Die Erfindung soll anhand mehrerer Ausführungsbeispiele näher erläutert werden. Dazu zeigen:
- Fig. 1:: eine Seitenansicht einer Vorrichtung mit einer in das Schüttgut eintauchenden und ziehenden Förderschnecke,
- Fig. 2:: eine Seitenansicht der Vorrichtung nach der Fig. 1 mit einem zusätzlich antreibenden Füllraum,
- Fig. 3:: eine Draufsicht des Aufnahmekörpers der Vorrichtung nach der Fig. 2,
- Fig. 4:: eine Seitenansicht der Vorrichtung mit zwei in das Schüttgut eintauchenden und ziehenden Förderschnecken und mit zwei zusätzlich antreibenden Füllräumen,
- Fig. 5:: eine Vorderansicht der Vorrichtung nach der Fig. 4,
- Fig. 6:: eine Draufsicht auf den Auflagekörper der Vorrichtung nach der Fig. 4.
- Fig. 7:: eine Draufsicht auf den Auflagekörper in einer vierten Ausführungsform und
- Fig. 8:: eine Seitenansicht der Vorrichtung mit einer in das Schüttgut eintauchenden und ziehenden Förderschnecke und mit einer freiliegenden Rückstoßfläche.

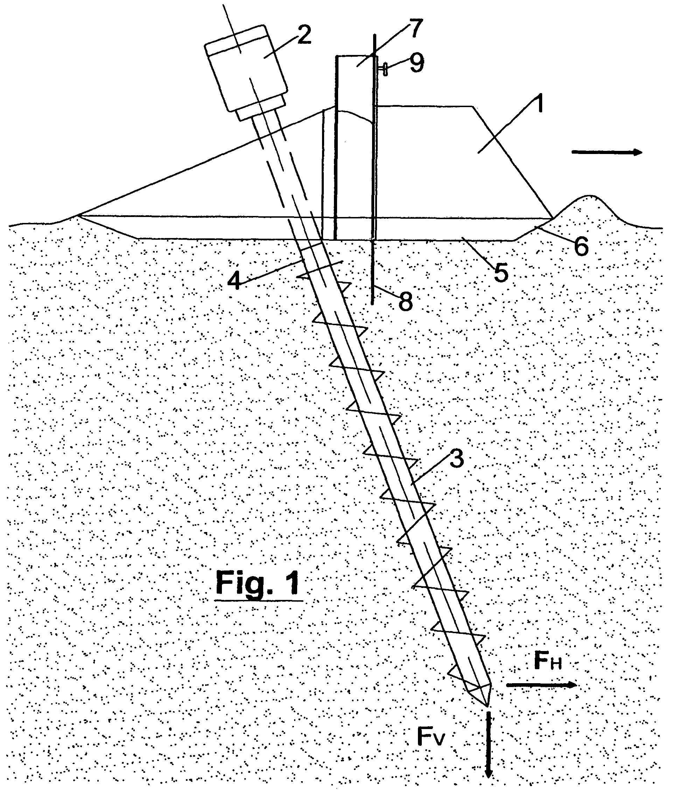

Die neue Vorrichtung zum Fördern von Korngut gemäß der Fig. 1 besteht im Wesentlichen aus einem Auflagekörper 1 und einer, von einem Motor 2 angetriebenen Förderschnecke 3. Dabei ist der Motor 2 auf dem Auflagekörper 1 verankert, während die Förderschnecke 3 den Auflagekörper 1 durchdringt und in dem Auflagekörper 1 drehbar gelagert ist. Eine Kupplungseinheit 4 verbindet die Förderschnecke 3 mit der Antriebsspindel des Motors 2.
Der Auflagekörper 1 ist vorzugsweise als ein Hohlkörper ausgebildet und besitzt demnach auch eine geschlossene Auflagefläche 5, die vorzugsweise in eine Bugfläche 6 ausläuft. Dabei ist die Auflagefläche 5 mit der Bugfläche 6 in der Größe so ausgeführt, dass der Auflagekörper 1 der Schwerkraft der Vorrichtung und den Förderkräften der Förderschnecke 1 widersteht und ein Einsinken oder ein Einfahren in das Korngut verhindert. Im Auflagekörper 1 befindet sich ein Einstellschächt 7, der den Auflagekörper 1 in der Höhe durchdringt, der auf Abstand zur Förderschnecke 1 angeordnet ist und der ein oder mehrere Hemm- und Steuerplatten 8 aufnimmt. Diese Hemm- und Steuerplatte 8 ist in der Höhe verstellbar und über einen Feststeller 9 arretierbar ausgeführt. Dabei ist die Hemm- und Steuerplatte 8, die Kontakt zum Korngut aufweist, in der Größe ihrer Fläche und in ihrem Abstand zur Förderschnecke 1 so ausgeführt und so angeordnet, dass der Auflagekörper 1 den Umfangskräften der Förderschnecke 1 entgegenwirkt und damit eine Drehung des Auflagekörpers 1 verhindert, um die Fahrtrichtung beizubehalten, oder nur behindert, um eine Fahrtrichtungsänderung zu erzielen. Neben dieser Hemm- und Steuerplatte 8 können andere oder weitere Hemmungen eingesetzt werden, die die gleiche Wirkung erbringen. So kann die Wirkung der Hemm- und Steuerplatte 8 zum Beispiel auch durch eine zusätzliche Handkraft unterstützt oder ersetzt werden, die über einen nicht näher gezeigten Handgriff eingeleitet wird. Bei einer ausreichenden und auf unbestimmte Art und Weise erzeugten Hemmkraft dreht sich also nur die Förderschnecke 3 und die Vorrichtung bleibt in Fahrtrichtung ausgerichtet.
Die Förderschnecke 3 ist vorzugsweise außerhalb des geometrischen Mittelpunktes der Auflagefläche 5 angeordnet und in besonderer Weise unter einem Winkel zur Vertikalen ausgerichtet. Dieser Winkel bestimmt die Größe einer horizontalen Kraftkomponente F_{H} und einer vertikalen Kraftkomponente F_{V} an der Förderschnecke 3, die sich als Gegenkräfte zur Förderkraft der Förderschnecke 3 einstellen. Dabei bestimmt die horizontale Kraftkomponente F_{H} die Bewegungsrichtung der mobilen Vorrichtung.

Zur Inbetriebnahme wird die Vorrichtung mit der Förderschnecke 3 horizontal auf das Korngut aufgelegt, wobei das freie Ende der Förderschnecke 3 Kontakt mit dem Korngut bekommt. Danach wird der Motor 2 angeschaltet, sodass die Förderschnecke 3 sich in das Korngut eingräbt. Dabei ist die Förderschnecke 3 bestrebt, sich in die Richtung der Vertikalen auszurichten. Das Eingraben ist dann beendet, wenn der Auflagekörper 1 auf dem Korngut aufliegt.
Danach beginnt die Förderung des Korngutes, in dem das in den Gewindegängen der Förderschnecke 3 befindliche Korngut entlang der Gewindegänge aus der Tiefe nach oben geschoben und an der Oberfläche des Korngutes abgelegt wird. Dabei wird immer nur in den untersten Gewindegängen neues Korngut aufgenommen, weil in den höheren Gewindegängen kein freier Raum mehr zur Aufnahme weiteren Korngutes vorhanden ist. Dadurch wird stets das zu unterste Korngut bis an die Oberfläche transportiert, während die Zwischenschichten lediglich in die unteren und frei gewordenen Hohlräume nachrutschen. Durch die untere Entnahme und die obere Ablage des Korngutes sowie durch das Nachrutschen des nicht beförderten Korngutes entsteht innerhalb des abgelegten Korngutes ein Umlauf, der wärmere Kornschichten nach oben und kühlere Kornschichten nach unter verlagert. Dabei verbleibt die Vorrichtung in ihrer ausgerichteten Stellung, da die von der drehenden Bewegung der Förderschnecke 3 ausgehenden Umfangskräfte von der Kontakt mit dem Korngut aufweisenden Hemm- und Steuerplatte 8 ganz oder teilweise aufgenommen werden. Die Wirkung der Hemm- und Steuerplatte 8 wird dabei von jeder Fläche des Auflagekörpers 1 unterstützt, wenn sie denn Kontakt zum Korngut hat oder bekommt.
Die sich durch die Drehung der Förderschnecke 3 innerhalb des Korngutes entwickelnden Kraftkomponenten wirken als Gegenkräfte auf den Auflagekörper 1. Dabei versucht die vertikale Kraftkomponente F_{V}, den Auflagekörper 1 in das Korngut zu ziehen, was die Auflage- und Bugflächen 5, 6 mit ihrer Flächengröße verhindern. Gleichermaßen wirkt auch die horizontale Kraftkomponente F_{H} auf den Auflagekörper 1, in dem sie den Auflagekörper 1 und damit die ganze Vorrichtung zu einer Fortbewegung antreibt. Die Förderschnecke 3 fördert also Korngut von unten nach oben und treibt gleichzeitig die Vorrichtung voran. Dabei bewegt sich die Vorrichtung in Übereinstimmung mit der Richtung der horizontalen Kraftkomponente F_{H}. Diese Richtung wird durch den eingetragenen Bewegungspfeil angedeutet.
Aus diesen Bedingungen ergibt sich, dass sowohl die Förderleistung als auch die Antriebsleistung durch die Motorleistung bestimmt wird. Eine Erhöhung der Motorleistung erfordert daher auch gleichzeitig eine Erhöhung der Hemmung, um auch weiterhin eine Drehung der Vorrichtung zu verhindern. Das geschieht in diester Ausführungsform durch die Verstellung der Hemm- und Steuerplatte 8, die eine Vergrößerung der Hemmfläche erbringt.

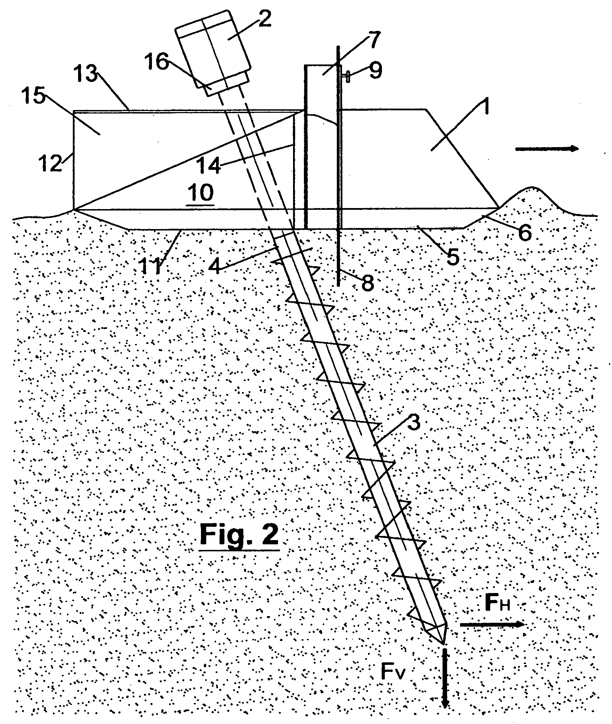

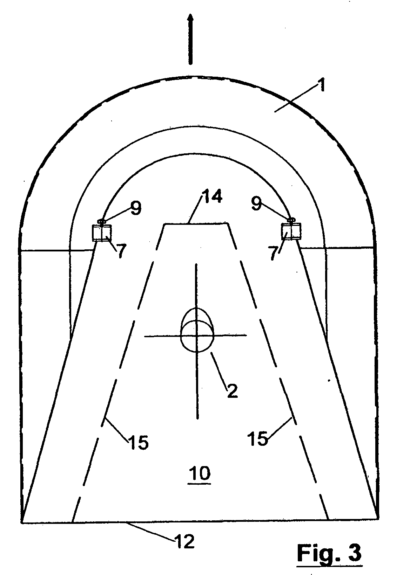

Die Vorrichtung gemäß den Fig. 2 und 3 besitzt ebenfalls einen Auflagekörper 1 mit der entsprechenden Auflagefläche 5 und der entsprechenden Bugfläche 6 und mit der durch den Motor 2 angetriebenen Förderschnecke 3. Im Unterschied zur ersten Ausführungsform ist die Auflagefläche 5 nicht geschlossen ausgebildet. So besitzt der Auflagekörper 1 vielmehr einen nach unten und zu einer Seite offenen Füllraum 10, so wie er bereits aus dem Stand der Technik bekannt ist. Dieser Füllraum 10 besitzt somit eine untere Befüllungsöffnung 11 und eine seitliche Ausstoßöffnung 12, die von einer oberen Deckenfläche 13, einer seitlichen und der Ausstoßöffnung 12 gegenüberliegenden Rückstoßfläche 14 und zwei, sich in Richtung der Ausstoßöffnung 13 vorzugsweise konisch erweiternden Seitenflächen 15 umschlossen sind.
Wie die Fig. 3 zeigt, besitzt der Auflagekörper 1 im Unterschied zur ersten Ausführungsform zwei Einstellschächte 7 mit jeweils einer verstellbaren und arretierbaren Hemm- und Steuerplatte 8. Dabei sind die beiden Einstellschächte 7 zueinander und zur Förderschnecke 3 beabstandet, sodass sich jeweils eine entsprechende Gegenkraft zum Drehmoment der Förderschnecke 3 aufbauen kann, die den Umfangskräften der Förderschnecke 3 entgegen wirkt. Auch hier sind andere oder weitere Hemmungen verwendbar. Die Abstände jeder Hemm- und Steuerplatte 8 zur Förderschnecke 3 sind vorzugsweise gleich groß.
Die Förderschnecke 3 kann wiederum in besonderer Weise außerhalb des geometrischen Mittelpunktes der Auflagefläche 5 angeordnet und mit einem Lager 16 am Auflagekörper 1 drehfest verankert sein. Ausgerichtet ist die Förderschnecke 3 wieder unter einem Winkel zur Vertikalen. Dabei durchdringt die Förderschnecke 3 den Auflagekörper 1 im Bereich des Füllraumes 10, sodass das geförderte Korngut in den Füllraum 10 gelangen kann. In dieser Ausführung wirken während des Betriebes die bereits zum ersten Ausführungsbeispiel beschriebenen Kraftkomponenten F_{H} und F_{V} auf die Vorrichtung, wobei die horizontale Kraftkomponente F_{H} die Vorrichtung in Bewegung versetzt. Diese Ausführungsform erzeugt aber innerhalb des Füllraumes 10 noch eine weitere Antriebskraft. So fördert die Förderschnecke 1 das Korngut in den Füllraum 10. Hier entsteht nach dem Erreichen des maximalen Füllvolumens ein entsprechender Fülldruck, der sich an der Rückstoßfläche 14 und an den Seitenflächen 15 in Richtung der Ausstoßöffnung 12 entlädt. Daraus entwickelt sich eine Gegenkraft, die auf die Rückstoßfläche 14 des Füllraumes 10 wirkt und die die gesamte Vorrichtung in eine Bewegungsrichtung verschiebt. Dadurch bewegt sich die Vorrichtung, auf dem Korngut aufliegend, in die Arbeitsrichtung, wobei gleichzeitig das aus der Tiefe geförderte Korngut aus dem Füllraum 10 ausgestoßen und oben in Form eines Korngutwalls abgelegt wird. Somit wirken sowohl die ziehende Kraft der horizontalen Kraftkomponente F_{H} an der Förderschnecke 3 als auch die im Füllraum 10 entstehende Rückstoßkraft in die gleiche Richtung, sodass sie sich überlagern und sich in ihren Antriebskräften addieren. Damit sind die Angriffsbereiche der Antriebskräfte zwischen oben und unten so verteilt, dass die Ausrichtung der Förderschnecke 3 auch bei einer hohen Geschwindigkeit beibehalten bleibt.
Eine Änderung der Fahrtrichtung erfolgt durch die Verstellung der beiden Hemm- und Steuerplatten 8 und damit durch eine ungleiche Verstellung der Hemmflächen an den beiden Hemm- und Steuerplatten 8. Dadurch schwenkt die Vorrichtung beispielsweise in Fahrtrichtung nach links, wenn die linke Hemmfläche größer als die rechte Hemmfläche ist. Die Fahrtrichtungsänderung kann auch hier durch eine Handkraft erfolgen oder unterstützt werden.

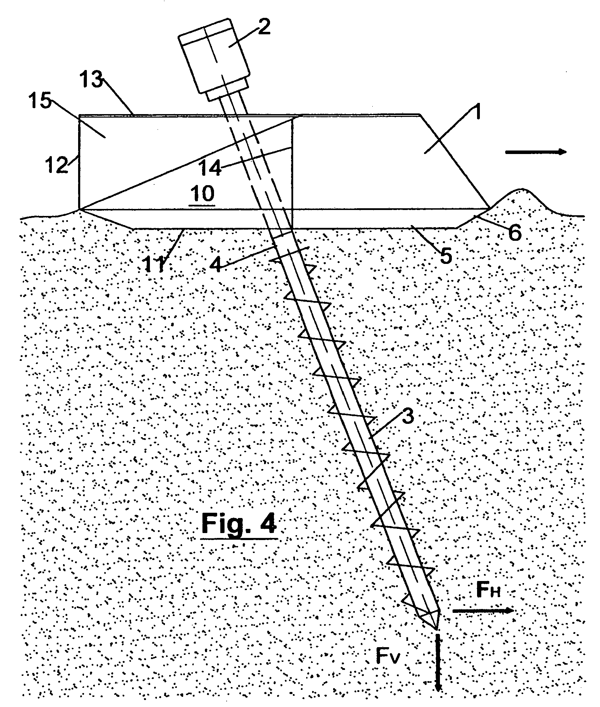

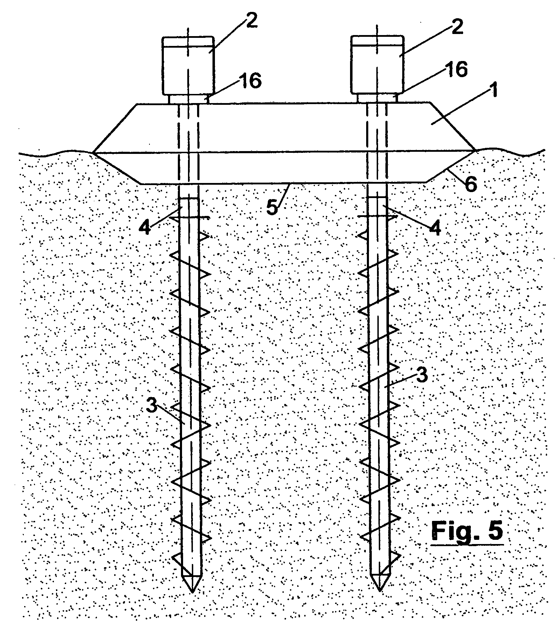

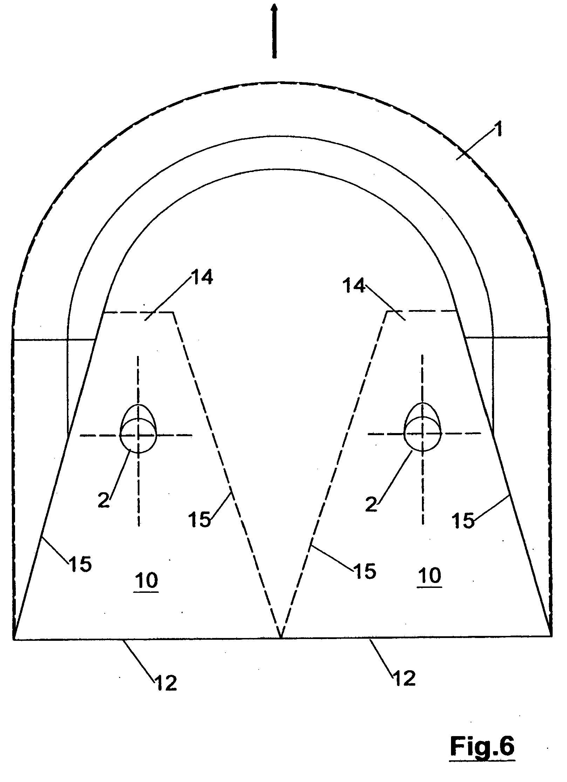

Die Vorrichtung gemäß den Fig. 4 bis 6 besitzt wiederum einen Auflagekörper 1, der allerdings nicht einen, sondern zwei in Bewegungsrichtung und auf Abstand nebeneinander angeordnete Füllräume 10 ausformt. Dabei ist jedem Füllraum 10 eine Förderschnecke 3 zugeordnet. Beide Förderschnecken 3 sind in übereinstimmender Weise zur zweiten Ausführungsform unter einem Winkel zur Vertikalen ausgerichtet. Dabei sind die Dimensionen, die Drehrichtungen und die Antriebsleistungen der beiden Förderschnecken 3 so gewählt, dass jede Förderschnecke 3 zur anderen Förderschnecke 3 eine den Umfangskräften der anderen Förderschnecke 3 entgegenwirkende Kraft aufbringt. Das allein hemmt und verhindert die Drehbewegung der Vorrichtung. Hemmungen, wie sie im ersten und zweiten Ausführungsbeispiel vorgesehen sind, sind daher bei einer richtigen Ausführung der beiden Förderschnecken 3 überflüssig.
Die Funktion dieser Ausführungsform entspricht der Funktion der bereits zuvor beschriebenen Ausführungsform, bei der die Vorrichtung sowohl durch die beiden ziehenden Kraftkomponenten F_{H} an den beiden Förderschnecken 3 als auch durch die in den beiden Füllräumen 10 auftretenden Rückstoßkräfte angetrieben wird. Durch die doppelte Ausführung mit den beiden Förderschnecken 3 und den beiden Füllräumen 10 sind die auf die Vorrichtung einwirkenden Antriebskräfte größer als bei der zweiten Ausführungsform, sodass auch die Bewegungsgeschwindigkeit der Vorrichtung nach der dritten Ausführungsform wesentlich größer ist.
Bei gleichen Drehzahlen, gleichen als auch gegensätzlichen Drehrichtungen, gleichen konstruktiven Ausführungen und bei gleichen Winkelstellungen der beiden Förderschnecken 3 ergeben sich gleiche Fahrwiderstände und gleichgroße horizontale Kraftkomponenten F_{H} für den Antrieb, sodass sich eine Geradeausfahrt ergibt. Von der Geradeausfahrt abweichende Fortbewegungsformen werden dementsprechend durch unterschiedliche Ausführungen und/oder Anordnungen der beiden Förderschnecken 3 erreicht. Diese unterschiedlichen Ausführungen und/oder Anordnungen der beiden Förderschnecken 3 können dazu führen, dass sich die Vorrichtung auf der Stelle drehend, auf einer Kreisbahn, einer spiralförmigen Bahn oder in einer beliebigen anderen Art vorwärts bewegt. Diese oder weitere Bewegungsarten sind auch unter Verwendung von einer oder mehrerer Förderschnecken realisierbar.

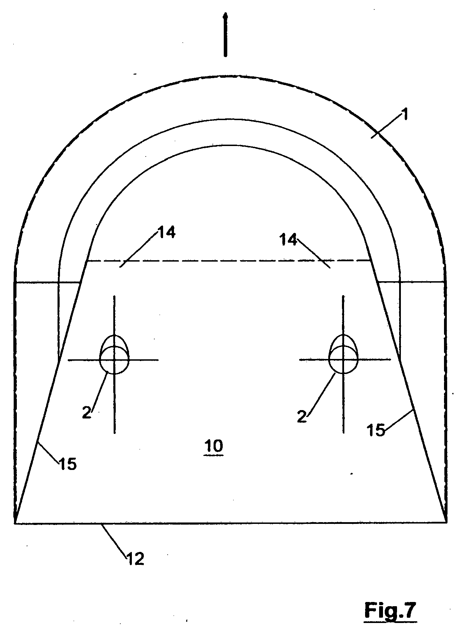

In einer weiteren Ausführungsform gemäß der Fig. 7 ist an Stelle der beiden Füllräume 10 nur ein Füllraum 10 vorgesehen, der von beiden Förderschnecken 3 durchlaufen wird. Dabei bleibt die Funktion unverändert, in dem aus der Förderleistung beider Förderschnecken 3 an der Rückstoßfläche 14 eine gemeinsame Rückstoßkraft erzeugt wird.

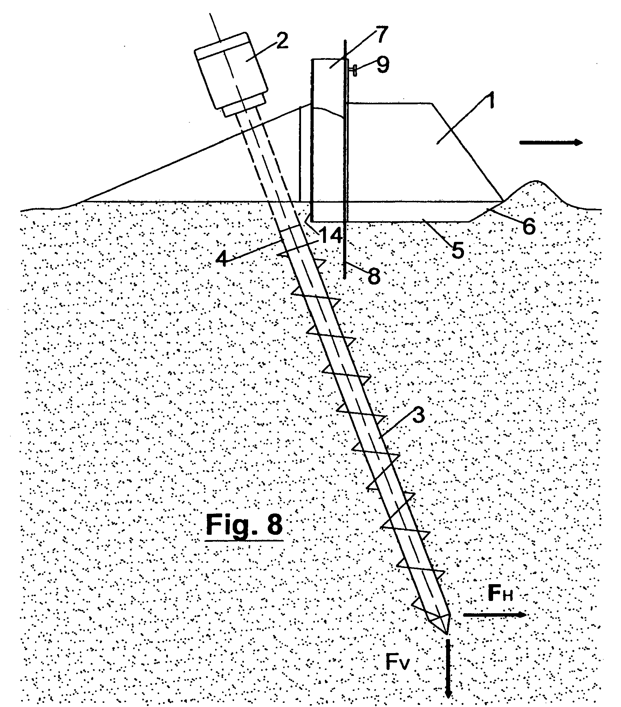

In der Fig. 8 wird eine abgewandelte Ausführungsform vorgestellt, in der an Stelle der ein oder mehreren Füllräume 10 eine freiliegende Rückstoßfläche 14 verwendet wird. Damit befindet sich die Rückstoßfläche 14 im Wirkungsbereich des geförderten Korngutstromes. Diese Rückstoßfläche 14 verläuft vorzugsweise vertikal zur Auflagefläche 5 und ist quer zur Bewegungsrichtung der Vorrichtung ausgerichtet. Dabei erstreckt sich die Rückstoßfläche 14 vorzugsweise über die gesamte Breite der Auflagefläche 5.
In einer vereinfachten Ausführungsform besitzt die geschlossene Auflagefläche 5 einen in der Höhe verlaufenden Absatz, der die Rückstoßfläche 14 ausbildet.

## Patentansprüche

1. Vorrichtung zum Fördern von Schüttgut, bestehend aus mindestens einer angetriebenen Förderschnecke (3) und mindestens einem, den Kräften der Förderschnecke (3) und den Massenkräften der Vorrichtung entgegenwirkenden Auflagekörper (1), welche eine Hemmung bewirken,
**dadurch gekennzeichnet, dass** der Auflagekörper (1) eine oder mehrere Rückstoßflächen (14) besitzt, die im Wirkungsbereich des geförderten Korngutstromes Kontakt mit dem Korngut haben und so zur Bewegungsrichtung der Vorrichtung ausgerichtet sind, dass die sich entwickelnden Rückstoßkräfte ganz oder teilweise mit der horizontalen Kraftkomponente F_{H}, die sich aus einer Bewegung und Ausrichtung der mindestens einen Förderschnecke (3) ergibt, gleich gerichtet sind und die mindestens eine Förderschnecke (3) in Fahrtrichtung in einem Winkel von größer 0° zur Vertikalen ausgerichtet oder ausrichtbar ist.

2. Vorrichtung nach Anspruch 1,
**dadurch gekennzeichnet, dass** die Rückstoßflächen (14) zu mindestens einem Füllraum (10) mit mindestens einer seitlichen Ausstoßöffnung (12) gehören.

3. Vorrichtung nach Anspruch 2,
**dadurch gekennzeichnet, dass** jeder Füllraum (10, 10') mit jeweils ein oder mehreren Förderschnecken (3) ausgestattet ist.

4. Vorrichtung nach Anspruch 1,
**dadurch gekennzeichnet, dass** mindestens zwei Förderschnecken (3) in ihrer Dimensionierung, ihrer Winkelstellung, ihrer Drehrichtung, ihrer Anordnung und ihrer Drehzahl so unterschiedlich ausgelegt sind, dass unterschiedliche Fortbewegungsformen möglich sind.

## Claims

1. A device for conveying bulk material consisting of at least one driven worm conveyor (3) and at least one supporting body (1) counteracting the forces of the worm conveyor (3) and the inertia forces of the device, which effect an inhibition,
**characterized in that** the supporting body (1) has one or more recoil faces (14) that are in contact with the grains in the range of action of the conveyed stream of grains and are oriented with respect to the direction of motion of the device such that the developing recoil forces completely or partially act in the same direction as the horizontal force component F_{H} and the at least one worm conveyor (3) is oriented or orientable, in the direction of motion, at an angle of greater than 0° with respect to the vertical line, said force component F_{H} resulting from a motion and orientation of the at least one worm conveyor (3).

2. The device according to Claim 1,
**characterized in that** the recoil faces (14) belong to at least one filling space (10) with at least one lateral ejecting aperture (12).

3. The device according to Claim 2,
**characterized in that** each filling space (10, 10') is equipped with one or more worm conveyors (3).

4. The device according to Claim 1,
**characterized in that** at least two worm conveyors (3) are designed so differently with respect to their dimensioning, their angular positions, their directions of rotation, their arrangements and their speeds that different forms of locomotion are possible.

## Revendications

1. Dispositif pour le transport de matières en vrac, composé d'au moins une vis transporteuse (3) entraînée et d'au moins un corps d'appui (1) agissant à l'encontre des forces de la vis transporteuse (3) et des forces massiques du dispositif qui provoquent un blocage,
**caractérisé en ce que** le corps d'appui (1) possède une ou plusieurs faces de contrecoup (14) qui, dans la zone d'action du flux de grains transporté, ont un contact avec les grains et sont orientées dans la direction de mouvement du dispositif de telle sorte que les forces de contrecoup qui se développent sont dirigées de façon uniforme totalement ou partiellement avec la composante de force horizontale F_{H} qui résulte du mouvement et de l'orientation de la vis transporteuse (3) au moins au nombre de un, et la vis transporteuse (3) au moins au nombre de un est orientée ou peut être orientée dans la direction de déplacement en formant un angle supérieur à 0° par rapport à la verticale.

2. Dispositif selon la revendication 1,
**caractérisé en ce que** les faces de contrecoup (14) font partie d'au moins un espace de remplissage (10) avec au moins une ouverture d'évacuation (12) latérale.

3. Dispositif selon la revendication 2,
**caractérisé en ce que** chaque espace de remplissage (10, 10') est équipé d'une ou de plusieurs vis transporteuses (3).

4. Dispositif selon la revendication 1,
**caractérisé en ce qu'**au moins deux vis transporteuses (3) sont conçues de façon différente au plan de leur dimension, de leur position angulaire, de leur sens de rotation, de leur disposition et de leur vitesse de rotation de telle sorte que différentes formes de déplacement sont possibles.
